# EUROPÄISCHE PATENTSCHRIFT

(11) **EP 3 359 378 B1**
(45) Veröffentlichungstag und Bekanntmachung des Hinweises auf die Patenterteilung: **12.02.2020**
(21) Anmeldenummer: 16778237.4
(22) Anmeldetag: 20.09.2016
(51) Int. Cl.: B32B 38/18, B32B 37/20, B32B 15/08, B32B 38/00

(54) **VERFAHREN UND ANLAGE ZUM KONTINUIERLICHEN HERSTELLEN VON VERBUNDBÄNDERN ODER -BLECHEN**
METHOD AND SYSTEM FOR CONTINUOUSLY PRODUCING COMPOSITE STRIPS OR COMPOSITE SHEETS
PROCÉDÉ ET INSTALLATION DE FABRICATION EN CONTINU DE FEUILLARDS OU DE TÔLES COMPOSITES

(30) Priorität: 06.10.2015 DE 102015116990
(43) Veröffentlichungstag der Anmeldung: 15.08.2018
(73) Patentinhaber: BWG Bergwerk- Und Walzwerk-Maschinenbau GmbH, 47051 Duisburg (DE)
(72) Erfinder: NOÉ, Andreas, 47647 Kerken (DE); STASKE, Matthias, 47627 Kevelaer (DE)
(74) Vertreter: Andrejewski - Honke Patent- und Rechtsanwälte Partnerschaft mbB
(86) Internationale Anmeldenummer: PCT/EP2016/072317
(87) Internationale Veröffentlichungsnummer: WO 2017/060077

(56) Entgegenhaltungen:
- EP-A1- 0 656 310
- WO-A1-2012/127185
- GB-A- 2 031 796
- US-A- 4 295 912

## Beschreibung

Die Erfindung betrifft ein Verfahren zum Herstellen von Verbundbändern oder - blechen, bestehend aus zumindest einer ersten (z.B. unteren) Deckschicht aus Metall, einer zweiten (z.B. oberen) Deckschicht aus Metall und einer zwischen den Deckschichten angeordneten und mit diesen stoffschlüssig verbundenen Kernschicht aus Kunststoff, wobei ein erstes Metallband für die erste Deckschicht, ein zweites Metallband für die zweite Deckschicht und eine Kunststoffbahn (z.B. Kunststofffolie) für die Kernschicht kontinuierlich zusammengeführt und unter Anwendung von Druck und/oder Wärme kontinuierlich miteinander stoffschlüssig verbunden werden.

Solche Metall-Kunststoff-Verbundbleche bzw. Sandwichbleche werden z.B. im Fahrzeugbau eingesetzt. Sie sollen zum einen herkömmliche Stahlbleche und zum anderen auch Aluminiumbleche ersetzen, da sie einerseits leichter als Stahlbleche, andererseits jedoch kostengünstiger als Aluminiumbleche sind. Die Deckbleche weisen dabei z.B. eine Dicke im Bereich von 0,1 mm bis 1 mm auf und die Kernschicht aus Kunststoff weist z.B. eine Dicke von 0,05 mm bis 3 mm auf. Solche Verbundbleche finden im Automobilbau vielfältigen Einsatz, z.B. als Karosseriebleche für die Außenhaut aber auch Struktur- und Verstärkungsteile. Die Sandwichbleche zeichnen sich durch eine hohe Biege- und Beulsteifigkeit aus und sie verfügen außerdem über gute Umformeigenschaften, so dass sie hervorragend zu entsprechenden Bauteilen verarbeitbar sind. Neben der Gewichts- und Kostenreduzierung lassen sich mit solchen Sandwichblechen auch die akustischen Eigenschaften und die Wärmedämmung verbessern.

Im Zuge der Herstellung werden für die Deckbleche zunächst z.B. kaltgewalzte Stahlbleche zur Verfügung gestellt, die in der Regel geglüht, dressiert und (elektrolytisch) verzinkt werden. Die auf diese Weise hergestellten Deckbleche werden dann als erste Deckschicht und als zweite Deckschicht unter Zwischenschaltung der Kunststoffbahn zusammengeführt und unter Druck und/oder Wärme miteinander verbunden, indem die Kunststoff-Kernschicht sowohl mit der ersten Deckschicht als auch mit der zweiten Deckschicht stoffschlüssig verbunden wird.

Ein Verfahren zum Herstellen von Verbundbändern oder -blechen ist z.B. aus der DE 10 2013 110 282 A1 bekannt. Dabei sollen die beiden Deckbleche aus einem Metallblech gebildet sein, dessen Oberflächen zueinander unterschiedliche Rauheiten aufweisen. Die Kunststoffschicht soll aus Polyamid, Polyethylen oder einer Mischung aus Polyamid und Polyethylen hergestellt sein. Das dressierte Metallband wird vor dem einseitigen Aufbringen der Kunststoffschicht zunächst in einer oder mehreren Bearbeitungsstationen vorbehandelt. So wird das Band z.B. in einer Bearbeitungsstation alkalisch entfettet und/oder gereinigt. In einer nachfolgenden Bearbeitungsstation wird die Bandoberfläche in einem oder mehreren chemischen Vorbehandlungsbädern passiviert und somit für die Beschichtung vorbereitet. Außerdem kann eine Bearbeitungsstation zum einseitigen Auftragen eines Haftvermittlers oder Klebstoffs vorgesehen sein. Nach dieser Vorbehandlung wird auf die gegebenenfalls mit Haftvermittler oder Kleber versehene Seite des Bandes eine Kunststoffschicht aufgebracht. Sie kann z.B. in Form einer vorgefertigten Kunststofffolie auf das Band aufkaschiert werden, z.B. mit einer Laminiervorrichtung, die Presswalzen aufweist, wobei zumindest eine der Walzen der Laminiervorrichtung beheizt sein kann. Nach dem Aufbringen der Kunststoffschicht durchläuft das einseitig beschichtete Band eine Kühlungs- und/oder Trocknungseinrichtung. Im Anschluss daran wird das Band zu einem Coil aufgewickelt und zwischengelagert oder unmittelbar zu einer Vorrichtung zum Aufbringen eines Deckbleches oder eines ebenfalls einseitig in einer Kunststoffschicht beschichteten Deckbleches weitertransportiert. In dieser nachgeschalteten Vorrichtung werden dann z.B. zwei bandförmige Halbzeuge zusammengeführt, die jeweils aus einem Deckblech und einer Kunststoffbeschichtung bestehen, wobei die beiden Halbzeuge von der jeweiligen Abwickelhaspel abgewickelt und einem Walzenpaar in der Weise zugeführt werden, dass die beiden Kunststoffschichten der Halbzeuge einander zugewandt sind und aneinander liegen. Unmittelbar bevor die Halbzeuge in den von den Walzen definierten Walzenspalt eingeführt werden, werden die Kunststoffschichten beider Halbzeuge durch von der Kunststoffoberflächenseite her einwirkende Mittel aktiviert (vgl. DE 10 2013 110 282 A1)

Ein ähnliches Verfahren zur Herstellung von Verbundblechen wird in der DE 10 2013 013 495 A1 beschrieben. Dabei erfolgt die Aktivierung der Kunststoffschicht der Halbzeuge unmittelbar von der mit Kunststoff beschichteten Seite des Halbzeuges her. Die Herstellung von Verbundblechen wird außerdem in der WO 91/12 135 A1 beschrieben.

In der DE 10 2011 015 071 A1 und der DE 10 2012 106 206 A1 werden entsprechende Sandwichbleche beschrieben, bei denen die Kunststoffschicht aus faserverstärktem Kunststoff besteht.

Alternativ beschreibt die EP 2 193 021 B1 ein Sandwichblech, bei dem die aus Kunststoff hergestellte Kernschicht als Schaumschicht ausgebildet ist, die ein Polyamid-Polyethylen-Blend aufweist.

Insgesamt besteht das Bedürfnis, Verbundbleche der eingangs beschriebenen Art in wirtschaftlicher Weise kontinuierlich mit hoher Qualität herzustellen. Hier setzt die Erfindung ein.

Im Übrigen kennt man aus der DE 10 2011 054 362 A1 ein Verfahren zur Herstellung von Verbundblechen mit metallischem Randbereich, wobei ein ausgewählter Randbereich des Verbundbleches derart erwärmt werden soll, dass die zwischen den äußeren Deckblechen angeordnete Kunststoffschicht erweicht. Durch eine Kraftbeaufschlagung auf mindestens ein äußeres Deckblech in dem Randbereich werden die Deckbleche punktweise oder bereichsweise gegeneinander gedrückt, so dass die Kunststoffschicht in dem mit einer Kraft beaufschlagten Randbereich austritt und anschließend oder gleichzeitig mit der Kraftbeaufschlagung werden beide Deckbleche im gequetschten Randbereich zumindest bereichsweise oder punktweise miteinander gefügt.

In der US 4,295,912 A wird die Herstellung eines Verbundbandes aus einerseits einer Metallfolie und andererseits einer Kunststofffolie beschrieben, wobei die beiden Folien bzw. Streifen an ihren Längsrändern mit Lochungen zur exakten Positionierung der beiden Bänder relativ zueinander versehen sind. Die Bänder können zunächst in einem ersten Schritt zur Vorpositionierung mit einer aufeinanderfolgenden Anordnung von Verbindungspunkten verbunden werden, bevor eine vollständige Verbindung in einer Verbindungsstation erfolgt. Ein ähnliches Verfahren zur Herstellung eines Folienverbundes wird in der EP 0 656 310 A1 beschrieben.
Schließlich befasst sich die DE 199 50 609 A1 mit einem Verfahren zum Reduzieren der Schrottlänge beim Walzen von Metallbändern, die mittels Schweißnähten verbunden werden. In einer durchlaufenden Tandemstraße mit zumindest zwei Walzgerüsten soll die jeweilige Schweißnaht vor dem ersten Walzgerüst angehalten oder im Schleichgang gefahren werden, während das zweite Walzgerüst das in Bezug auf die Schweißnaht vorlaufende Metallband weiterwalzt.

Der Erfindung liegt die Aufgabe zugrunde, ein gattungsgemäßes Verfahren zu schaffen, mit welchem sich Verbundbänder oder -bleche wirtschaftlich mit hoher Qualität herstellen lassen. Insbesondere soll die Erzeugung von Schrott bzw. Ausschuss im Zuge des Anfahrens des Prozesses vermieden bzw. reduziert werden.

Zur Lösung dieser Aufgabe lehrt die Erfindung ein Verfahren zum Herstellen von Verbundbändern oder -blechen mit den Merkmalen des Anspruchs 1 und eine Anlage mit den Merkmalen des Anspruchs 7. Bei dem Verfahren ist vorgesehen, dass die Metallbänder beim Anfahren des Prozesses (im Bereich des Bandanfangs) mit einer (zusätzlichen) Bandverbindungsvorrichtung lokal miteinander verbunden werden.

Die Erfindung geht dabei von der Erkenntnis aus, dass für die wirtschaftliche Herstellung von solchen Verbundbändern insbesondere Probleme beim Anfahren des Prozesses und vor allem die übermäßige Produktion von Schrott bzw. Ausschuss vermieden werden müssen. Denn erfindungsgemäß werden die beiden Metallbänder, welche die Deckschichten bilden, nicht nur kontinuierlich unter Zwischenschaltung der Kunststoffschicht und unter Anwendung von Druck und Wärme stoffschlüssig miteinander verbunden, sondern erfindungsgemäß kommt im Zuge des Anfahrens eine zusätzliche lokale Bandverbindungsvorrichtung zum Einsatz, mit welcher die (zusammengeführten) Bänder im Bereich zumindest eines Bandanfangs zusätzlich bzw. unabhängig von der eigentlichen stoffschlüssigen Verbindung miteinander verbunden werden. Eine solche Verbindung zum lokalen Verbinden der beiden Metallbänder kann z.B. durch Stanzen, Nieten, Durchsetzfügen (Clinchen) und/oder Schweißen erfolgen. Alternativ kommt auch eine Klebeverbindung in Betracht. Solche Bandverbindungsvorrichtungen sind aus Prozesslinien für die Herstellung von Metallbändern bekannt. Sie werden an verschiedensten Stellen in der Bandverarbeitung, z.B. Stahlbandverarbeitung oder auch Aluminiumverarbeitung eingesetzt. Erfindungsgemäß wird mit einer solchen Bandverbindungsvorrichtung der einwandfreie Anlauf eines Verfahrens zum Herstellen von Verbundbändern ermöglicht. Durch das lokale Verbinden der beiden Metallbänder wird gewährleistet, dass die beiden Metallbänder im Bereich zumindest eines Bandanfangs unabhängig von einer zwischengeschalteten Kunststoffschicht und unabhängig von einer stoffschlüssigen Verbindung über die Kunststoffschicht durch die Bandverbindung fest miteinander verbunden sind, so dass eine Delamination im Bereich des Bandanfangs beim Anlauf und insbesondere beim weiteren Durchlauf durch die einzelnen Anlagenteile zuverlässig vermieden wird. Insgesamt lässt sich die Betriebssicherheit einer Anlage zum Herstellen von Sandwichblechen verbessern. Störungen, die z.B. dadurch bewirkt werden könnten, dass eines der Bänder an einer Rolle im weiteren Prozess hängenbleibt, werden sicher vermieden. Ein weiterer Vorteil besteht darin, dass über die Bandverbindung Bandzug von dem einen Band auf das andere Band übertragen werden kann, so dass nicht die Gefahr besteht, dass sich eines der Bänder aufgrund des Bandzuges von dem anderen Band ablöst.

Dabei ist es z.B. vorgesehen, dass die beiden Metallbänder (unter Zwischenschaltung der Kunststoffbahn) zusammengeführt werden und anschließend gemeinsam eine Heizstrecke durchlaufen. In diesem Zusammenhang ist besonders vorteilhaft, wenn die Metallbänder nach dem Zusammenführen, jedoch vor dem gemeinsamen Heizen lokal miteinander verbunden werden, z.B. durch Stanzen, Heften, Nieten, Durchsetzfügen und/oder Schweißen oder Kleben. Auf diese Weise wird eine Delamination im Bereich des Bandanfangs beim Durchlaufen z.B. einer Heizstrecke vermieden.

Erfindungsgemäß werden die beiden Metallbänder beim Anfahren des Prozesses zunächst lokal in einen Bandabschnitt ohne eine dazwischen angeordnete Kunststoffbahn miteinander verbunden. Beim Anfahren des Prozesses werden zwar üblicherweise die beiden Metallbänder unter Zwischenschaltung der Kunststoffbahn zusammengeführt. Die Erfindung hat jedoch erkannt, dass es zweckmäßig ist, zunächst in einem Vorlaufbereich die beiden Metallbänder ohne zwischengeschaltete Kunststoffschicht zusammenzuführen und die Metallbänder in diesem Vorlaufbereich in der beschriebenen Weise lokal miteinander zu verbinden. Eine solche Ausgestaltung hat den großen Vorteil, dass beim Durchlaufen durch die Anlage und insbesondere die entsprechenden Heiz- und gegebenenfalls Press-Strecken von Anfang an die beiden Oberflächen der durchlaufenden Anordnung von Metallbändern und nicht von dem Kunststoffband gebildet werden. Im Einzelnen wird dieses in der Figurenbeschreibung beispielhaft erläutert.

Dabei liegt es im Rahmen der Erfindung, dass die Metallbänder, die im Zuge des Anfahrprozesses zugeführt und zusammengeführt werden, zeitweise angehalten und stehend lokal miteinander verbunden werden, z.B. mit einer herkömmlichen Bandverbindungsvorrichtung. Alternativ liegt es jedoch auch im Rahmen der Erfindung, dass die lokale Bandverbindung bei sich bewegenden Bändern, z.B. in einem Schleichmodus, erzeugt wird. Dieses lässt sich z.B. dadurch realisieren, dass eine Bandverbindungsvorrichtung, z.B. eine Heftmaschine oder dergleichen, verfahrbar montiert ist.

Die Bandverbindung wird bevorzugt im Bereich des Bandanfangs eines Bandes, z.B. des oberen Bandes erzeugt. Dabei geht die Erfindung von der Erkenntnis aus, dass bevorzugt eines der Bänder, z.B. das untere Band im Zuge der Inbetriebnahme vollständig in die Anlage eingezogen wird, so dass es mit entsprechend vorgesehenen Zugrollen oder auch einem Aufwickelhaspel durch die Anlage gezogen wird. Demgegenüber wird das andere Metallband, z.B. das obere Metallband dann dem Bereich der Zusammenführeinrichtung zugeführt und mit dem anderen Band (z.B. dem unteren Band) zusammengeführt, so dass die Bandverbindung dann im Bereich des Bandanfanges eines Bandes, z.B. des oberen Bandes erzeugt wird.

Gegenstand der Erfindung ist auch eine Anlage zum Herstellen von Verbundbändern oder -blechen, insbesondere nach einem Verfahren der beschriebenen Art, wobei die Verbundbänder oder -bleche aus zumindest einer ersten Deckschicht aus Metall, einer zweiten Deckschicht aus Metall und einer zwischen den Deckschichten angeordneten und mit diesen stoffschlüssig verbundenen Kernschicht aus Kunststoff bestehen. Diese Anlage weist eine Zusammenführvorrichtung auf, in der die Metallbänder unter Zwischenschaltung der Kunststoffbahn zusammenführbar sind. Außerdem weist die Anlage ggf. eine der Zusammenführvorrichtung nachgeordnete Heiz- und/oder Pressvorrichtung auf, mit der die Metallbänder unter Anwendung von Druck und/oder Wärme mit der Kunststoffbahn kontinuierlich stoffschlüssig verbunden werden, so dass das Verbundband bzw. Sandwichband oder -blech gebildet wird. Diese Anlage ist erfindungsgemäß dadurch gekennzeichnet, dass in oder hinter der Zusammenführvorrichtung und bevorzugt zwischen der Zusammenführvorrichtung und der Heiz- und Pressvorrichtung eine (zusätzliche) Bandverbindungsvorrichtung für eine lokale Verbindung der Metallbänder beim Anfahren des Prozesses angeordnet ist.

Diese Bandverbindungsvorrichtung kann als Stanzvorrichtung ausgebildet sein (Stitchen). Alternativ kann die Bandverbindungsvorrichtung als Nietvorrichtung ausgebildet sein, bei welcher die Bänder formschlüssig über separate Nieten verbunden werden. Bevorzugt kann die Bandverbindungsvorrichtung als Durchsetzfügevorrichtung ausgebildet sein, bei der die Bänder z.B. durch Clinchen und besonders bevorzugt durch Clinchen ohne Schneidkanten miteinander verbunden werden. Insofern wird eine Bandverbindungsvorrichtung als Durchsetzfügevorrichtung ausgebildet sein, bei der die Bänder z.B. durch Clinchen und besonders bevorzugt durch Clinchen ohne Schneidkanten miteinander verbunden werden. Folglich wird bevorzugt eine Bandverbindungsvorrichtung verwendet, bei welcher die beiden Metallbänder formschlüssig mechanisch miteinander verbunden werden. Alternativ liegt es jedoch auch im Rahmen der Verbindung, dass die Bandverbindungsvorrichtung als Schweißvorrichtung ausgebildet ist. Alternativ kann die Bandverbindung jedoch auch durch Kleben realisiert werden. Dazu kann der Klebstoff z.B. durch Sprühkleben aufgebracht werden. Dieses ist auch unmittelbar in der Zusammenführvorrichtung, z.B. im Kalander möglich. Alternativ kann auch eine Verbindung über Klebebänder realisiert werden. Die Bandverbindungsvorrichtung kann folglich auch in die Zusammenführvorrichtung integriert werden.

Besonders bevorzugt werden für die Herstellung der Verbundbleche im Rahmen der Erfindung Deckbleche aus Stahlblech verwendet. Die Erfindung umfasst aber auch den Einsatz von Deckblechen aus anderen Metallen, z.B. Aluminium oder Aluminiumlegierungen oder Magnesium bzw. Magnesiumlegierungen.

Es werden bevorzugt kaltgewalzte, verzinkte Stahlbleche, z.B. elektrolytisch verzinkte und/oder feuerverzinkte Stahlbleche verwendet.

Die metallischen Deckbleche weisen bevorzugt eine Dicke von 0,1 mm bis 1 mm, vorzugsweise 0,2 mm bis 0,6 mm auf.

Die Kernschicht aus Kunststoff kann eine Dicke von 0,05 mm bis 3 mm, z.B. 0,3 mm bis 2 mm aufweisen. Die Dickenangaben beziehen sich auf die fertig hergestellte Verbundbahn.

Die Kunststoffbahn ist bevorzugt als Kunststofffolie ausgebildet. Die Kunststoffbahn kann z.B. aus thermoplastischem Kunststoff bestehen, z.B. aus Polyethylen, Polypropylen und/oder Polyamid. Kunststoff bzw. Kunststoffbahn meint im Rahmen der Erfindung auch einen Kunststoff bzw. eine Kunststoffbahn, die mit Zusätzen, z.B. Fasern versehen ist, z.B. faserverstärkte Kunststoffe und Kunststoffbahnen und solche, die Kunststoff als einen Bestandteil enthalten. Im Übrigen liegt es im Rahmen der Erfindung, dass die Deckbleche unter Zwischenschaltung mehrerer Kunststoffschichten miteinander verbunden werden, so kann den beiden Deckschichten jeweils zumindest eine Kunststoffschicht zugeordnet sein, so dass dann die beiden Kunststoffschichten miteinander verbunden werden.

Im Übrigen ist es bevorzugt vorgesehen, dass die Metallbänder für die Deckbleche, d.h. das erste Deckblech und das zweite Deckblech (im Wesentlichen), dieselbe Bandbreite aufweisen. Außerdem ist es zweckmäßig, wenn das erste Metallband und das zweite Metallband vor oder während des Zusammenführens zueinander zentriert werden. Dazu können in der Anlage übliche Messvorrichtungen und Steuervorrichtungen bzw. Regelvorrichtungen vorgesehen sein. Durchläuft z.B. das erste Band die Anlage in einer bestimmten Bandlage und wird das zweite Band diesem ersten Band zugeführt, so ist es zweckmäßig, das zweite Band relativ zu dem ersten Band zu zentrieren.

Im Folgenden wird die Erfindung anhand einer lediglich ein Ausführungsbeispiel darstellenden Zeichnung näher erläutert. Es zeigen:
- Fig. 1: ein Verbundband bzw. -blech in einem vereinfachten Querschnitt und
- Fig. 2: eine Anlage zum Herstellen der Verbundbänder nach Fig. 1 in einer stark vereinfachten Seitenansicht,
- Fig. 3: den Gegenstand nach Fig. 1 in einer zweiten Ausführungsform und
- Fig. 4: den Gegenstand nach Fig. 1 in einer dritten Ausführungsform.

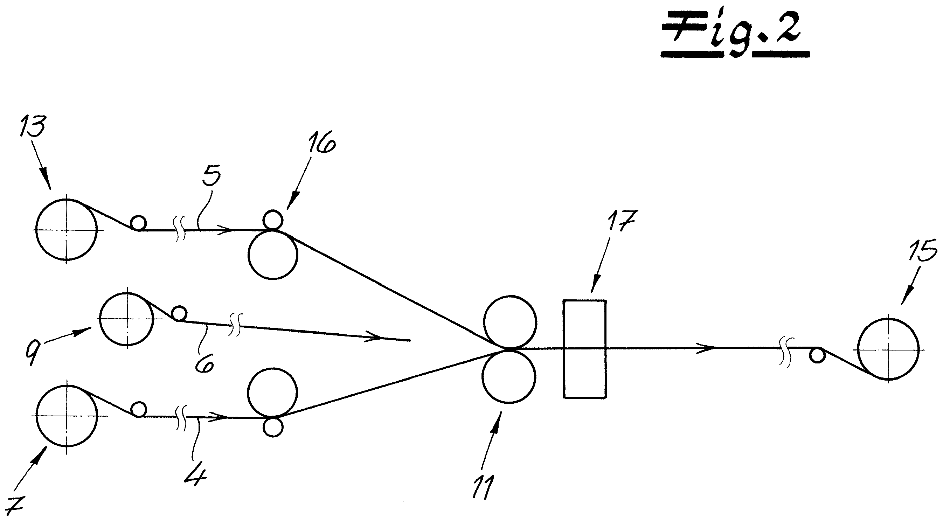

Mit der in den Fig. 2 bis 4 dargestellten Anlage lassen sich Verbundbänder bzw. -bleche herstellen, die aus zumindest einer ersten Deckschicht 1 aus Metall, einer zweiten Deckschicht 2 aus Metall und zumindest einer zwischen den Deckschichten 1, 2 angeordneten Kernschicht 3 aus Kunststoff bestehen, wobei die Deckschichten 1, 2 stoffschlüssig mit der Kernschicht 3 aus Kunststoff verbunden sind.

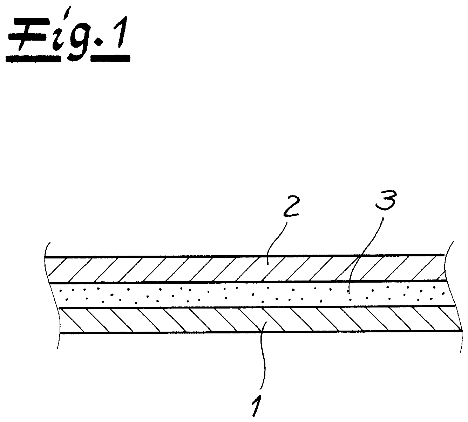

Zum Herstellen solcher Verbundbänder nach Fig. 1 werden in den Anlagen nach den Fig. 2 bis 4 ein erstes Metallband 4 für die erste Deckschicht und ein zweites Metallband 5 für die zweite Deckschicht und eine Kunststoffbahn 6 für die Kernschicht zur Verfügung gestellt. Das erste Metallband 4 und das zweite Metallband 5 und die Kunststoffbahn 6 werden kontinuierlich zusammengeführt und unter Anwendung von Druck und/oder Wärme kontinuierlich miteinander stoffschlüssig verbunden. Dazu ist in den Anlagen zumindest eine Zusammenführvorrichtung 11 vorgesehen.

Das erste Metallband 4 wird von einem ersten Abwickler 7 abgewickelt und gegebenenfalls mit einem Haftvermittler beschichtet. Einzelheiten dazu und auch weitere optionale Vorbehandlungsmöglichkeiten sind in den Figuren nicht dargestellt. Das zweite Metallband 5 für die zweite Deckschicht wird von einem weiteren Abwickler 13 abgewickelt und gegebenenfalls mit einem Haftvermittler beschichtet. Auch hier sind Einzelheiten dazu und auch weitere optionale Vorbehandlungsmöglichkeiten nicht dargestellt.

Die Kunststoffbahn 6, die z.B. als Kunststofffolie ausgebildet sein kann, wird von einem Abwickler 9 abgewickelt und gegebenenfalls vorgeheizt. Einzelheiten zum Vorheizen der Kunststoffbahn und auch zu einer optionalen Vorheizung der Metallbänder sind nicht dargestellt.

Das erste Metallband 4 und das zweite Metallband 5 werden unter Zwischenschaltung der Kunststoffbahn 6 in einem kontinuierlichen Prozess zusammengeführt und auf diese Weise wird die erfindungsgemäße Verbundbahn hergestellt. Der Verbund aus Metallbändern 4, 5 und Kunststoffbahn 6 können anschließend eine nicht im Einzelnen dargestellte Heiz- und Pressstrecke sowie gegebenenfalls weitere Anlagenteile durchlaufen. Das auf diese Weise hergestellte Verbundband kann entweder als Endlosband auf einer Haspel 15 aufgewickelt oder sogleich in der Anlage zu Tafeln bzw. Blechen geschnitten werden. Einzelheiten sind nicht dargestellt.

Es versteht sich, dass eine solche Anlage in üblicher Weise mit entsprechenden Treibern, Spannrollen, Bandspeichern usw. ausgestattet ist. Einzelheiten sind in den Figuren ebenfalls nicht dargestellt.

Von besonderer Bedeutung ist im Rahmen der Erfindung der Anfahrprozess einer solchen Anlage, die beispielhaft in verschiedenen Varianten in den Fig. 2 bis 3 schematisch dargestellt ist. Denn erfindungsgemäß werden die Metallbänder 4, 5 beim Anfahren des kontinuierlichen Prozesses mit einer Bandverbindungsvorrichtung 17 lokal miteinander verbunden.

Dazu zeigt Fig. 2 eine erste Ausführungsform mit im Wesentlichen horizontaler Bandführung, d.h. die Bandverbindung wird bei im Wesentlichen horizontal laufenden Bändern erzeugt.

In dem dargestellten Ausführungsbeispiel werden die Metallbänder 4, 5 während einer Anfahrphase zusammengeführt, ohne dass die Kunststoffbahn 6 zugeführt wird. Das erste Metallband 4 und das zweite Metallband 5 werden folglich zusammengeführt, ohne dass in dieser Anfahrphase die Kunststoffbahn 6 zwischengeschaltet ist. Dieses ist in Fig. 2 angedeutet. Das erste Metallband 4 und das zweite Metallband 5 durchlaufen folglich zunächst ohne zwischengeschaltete Kunststoffbahn die Zusammenführvorrichtung 11 und gelangen in dem Bereich der Bandverbindungsvorrichtung 17, in welcher die beiden Metallbänder ohne Zwischenschaltung der Kunststoffbahn 6 miteinander verbunden werden, und zwar lokal. Die über die Bandverbindungsvorrichtung 17 erzeugte Bandverbindung, die gleichsam eine sich über die Bandbreite erstreckende Naht bildet, ist von der im Zuge des kontinuierlichen Prozesses erzeugten stoffschlüssigen Verbindung über die Kunststoffbahn zu unterscheiden. Für die Bandverbindung werden die Bänder im Ausführungsbeispiel angehalten. Nachdem die Bandverbindung erzeugt wurde, werden die Metallbänder weiter transportiert. Erst nachdem diese Bandverbindung erzeugt wurde, wird dann die Kunststoffbahn 6 in die Zusammenführvorrichtung 11 zugeführt, so dass der lokalen Bandverbindung dann der gewünschte Mehrschichtaufbau folgt.

Dabei ist es bei der Inbetriebnahme z.B. vorgesehen, dass zunächst das erste Band 4 vollständig in die Anlage eingezogen wird, so dass es z.B. mit einer nicht dargestellten Zugrolle und/oder dem Aufwickelhaspel 15 durch die Anlage gezogen wird. Das zweite Metallband 5 wird über einen Treiber 16 mit seinem Bandanfang zugeführt und auf das untere Band 4 geführt, und zwar durch die Zusammenführvorrichtung 11, z.B. ein Druckrollenpaar hindurch bis in den Bereich der Bandverbindungsvorrichtung 17. Sobald der Bandanfang des zweiten Bandes 5 die Bandverbindungsvorrichtung 17 erreicht hat, wird auch das zweite Band 5 angehalten und das zweite Band 5 kann mit dem ersten Band 4 lokal verbunden werden, ohne dass dabei die Kunststoffbahn zwischengeschaltet ist. Nachdem die Verbindung erzeugt wurde, kann der Treiber 16 geöffnet werden, da der Bandzug dann von der Bandverbindung gehalten werden kann. Anschließend werden dann das erste Metallband 4 und das zweite Metallband 5 gemeinsam durch die Anlage gezogen und es wird dann auch die Kunststoffbahn 6 in den Bereich der Zusammenführvorrichtung 11 geführt, so dass der gewünschte Mehrschichtaufbau erfolgt.

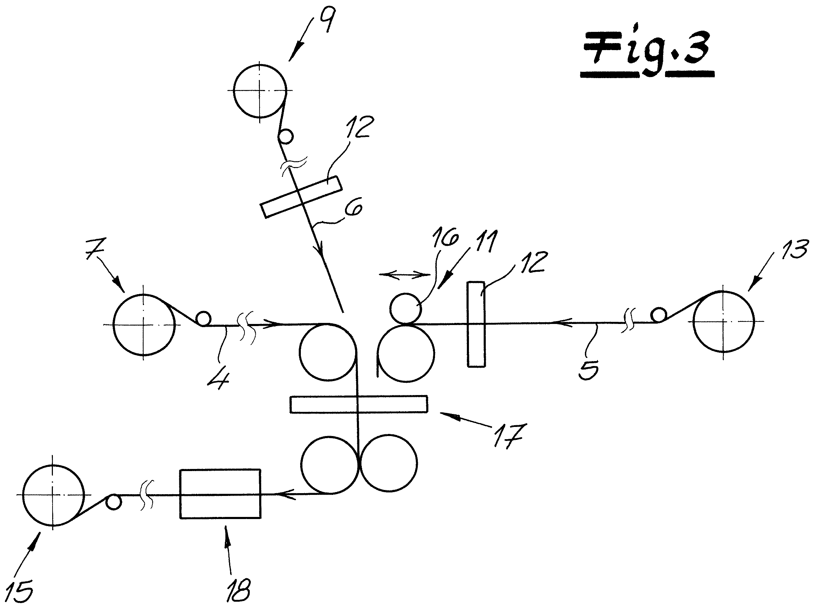

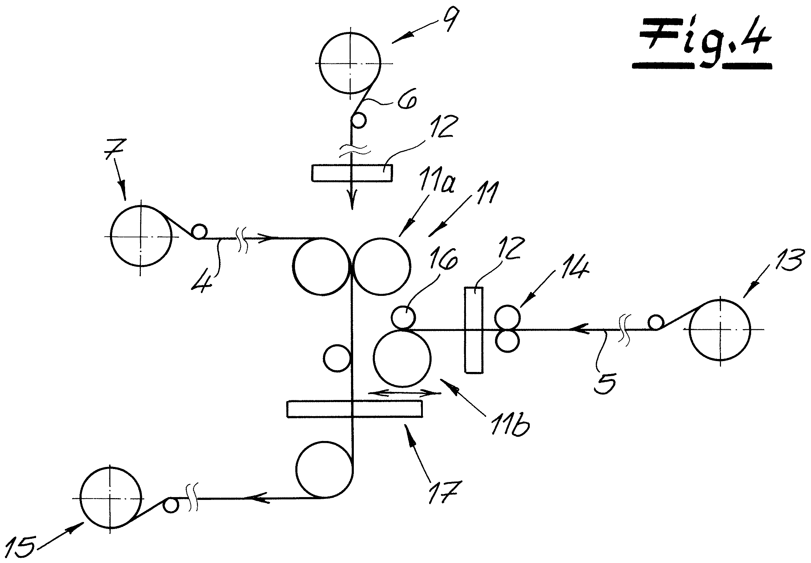

Fig. 3 zeigt eine abgewandelte Ausführungsform einer solchen Anlage, bei der die Bandverbindung nicht bei einer horizontalen, sondern bei einer im Wesentlichen vertikalen Bandführung erzeugt wird. In dem dargestellten Ausführungsbeispiel wird wiederum das erste Metallband 4 zunächst in die Anlage eingezogen und angehalten. Anschließend wird das zweite Band 5 über den Treiber 16 zugeführt. Sobald der Bandanfang den Bandverbinder 17 erreicht hat, erfolgt die lokale Bandverbindung, und zwar im Zuge einer vertikalen Bandführung. Die Zusammenführvorrichtung 11 ist dabei ebenfalls von einem Rollenpaar bzw. als Kalander ausgebildet, der geöffnet und geschlossen werden kann. In diesem Ausführungsbeispiel ist die Treiberrolle 16 mit dem Kalander 11 kombiniert, es kann jedoch auch ein separater Treiber 16 vorgesehen sein. Fig. 3 zeigt die Zusammenführvorrichtung 11 dabei in der geöffneten Position, das Rollenpaar wird jedoch während des Betriebes für das Zusammenführen der Bänder geschlossen. Der zusammengeführte Verbund aus Metallbändern 4, 5 und Kunststoffbahn 6 kann anschließend einen weiteren Kalander und/oder eine Nachheizstrecke 18 bzw. eine Heiz- und Pressstrecke durchlaufen. Diese ist lediglich in Fig. 3 angedeutet, sie kann aber auch bei den Varianten nach Fig. 2 und 4 vorgesehen sein.

In Fig. 4 ist eine abgewandelte Ausführungsform dargestellt, bei der die Kunststoffbahn 6 den Metallbändern 4, 5 im kontinuierlichen Prozess in zwei Stufen zugeführt wird. Die Zusammenführvorrichtung 11 weist eine erste Laminiereinheit 11a auf, in der die Kunststoffbahn 6 mit dem ersten Metallband 4 zusammengeführt wird. Außerdem weist die Zusammenführvorrichtung 11 eine zweite Laminiereinheit 11b auf, in der das zweite Metallband 5 zugeführt und mit der Kunststoffbahn 6 verbunden wird. Auch bei dieser Ausführungsform ist ein Bandverbinder 17 vorgesehen. Im Zuge des Anfahrens besteht folglich die Möglichkeit, zunächst das erste Metallband 4 vollständig in die Anlage einzuziehen und anzuhalten. Bevor die Kunststoffbahn 6 zugeführt wird, wird zunächst in der zweiten Laminiereinheit 11b das zweite Metallband 5 zugeführt.

Sobald der Bandanfang des zweiten Metallbandes 5 den Bandverbinder 17 erreicht hat, erfolgt die lokale Bandverbindung. Anschließend kann wieder der Treiber 16 geöffnet werden, so dass der Bandzug des zweiten Metallbandes 5 von der Bandverbindung gehalten wird. Danach kann dann das erste Metallband 4 mit dem daran befestigten zweiten Metallband 5 durch die Anlage gezogen und für den kontinuierlichen Prozess die Kunststoffbahn 6 zugeführt werden.

Die in Fig. 4 dargestellte getrennte Zugführung der Metallbänder 4 und 5 lässt sich nicht nur bei der dargestellten vertikalen Ausführungsform, sondern auch bei einer horizontalen Ausführungsform realisieren. Eine solche ist in den Figuren nicht dargestellt.

Im Übrigen sind in den Figuren Bandscheren 12 und weitere Treiber 14 angedeutet, die insbesondere im Zuge der Unterbrechung des Prozesses von Bedeutung sind.

Erfindungsgemäß ist folglich eine vorauseilende Bandverbindung von Bedeutung. Diese hat den Vorteil, dass eine Delamination im Bereich des Bandanfangs vermieden wird. Auf diese Weise werden Störungen des Produktionsprozesses vermieden. Dieses ist für die Wirtschaftlichkeit des Gesamtprozesses von sehr großer Bedeutung. Außerdem wird in den Anlagenbereichen nach der Zusammenführvorrichtung 11 zuverlässig verhindert, dass die Kunststoffbahn mit den weiteren Anlagenkomponenten und insbesondere Rollen, z.B. Druckrollen im Zuge des Verpressens in Verbindung kommt, so dass auch diesbezüglich die Anlagenkomponenten geschont und Störungen vermieden werden.

## Patentansprüche

1. Verfahren zum Herstellen von Verbundbändern oder -blechen, bestehend aus zumindest einer ersten Deckschicht (1) aus Metall, einer zweiten Deckschicht (2) aus Metall und zumindest einer zwischen den Deckschichten (1, 2) angeordneten und mit diesen stoffschlüssig verbundenen Kernschicht (3) aus Kunststoff,
wobei ein erstes Metallband (4) für die erste Deckschicht (1), ein zweites Metallband (5) für die zweite Deckschicht (2) und eine Kunststoffbahn (6) für die Kernschicht (3) kontinuierlich zusammengeführt und unter Anwendung von Druck und/oder Wärme kontinuierlich miteinander stoffschlüssig verbunden werden,
**dadurch gekennzeichnet, dass** die Metallbänder (4, 5) beim Anfahren des kontinuierlichen Prozesses mit einer Bandverbindungsvorrichtung (17) zunächst lokal ohne eine dazwischen angeordnete Kunststoffbahn miteinander verbunden werden.

2. Verfahren nach Anspruch 1, **dadurch gekennzeichnet, dass** die Metallbänder (4, 5) beim Anfahren des Prozesses zeitweise angehalten und stehend lokal miteinander verbunden werden.

3. Verfahren nach Anspruch 1, **dadurch gekennzeichnet, dass** die Metallbänder im Zuge des Bandtransportes lokal miteinander verbunden werden, z.B. in einem geschwindigkeitsreduzierten Schleichmodus.

4. Verfahren nach einem der Ansprüche 1 bis 3, **dadurch gekennzeichnet, dass** die Metallbänder (4, 5) durch Stanzen, Nieten, Durchsetzfügen, Kleben und/oder Schweißen lokal miteinander verbunden werden.

5. Verfahren nach einem der Ansprüche 1 bis 4, **dadurch gekennzeichnet, dass** die Metallbänder (4, 5) nach dem Zusammenführen und vor einem gemeinsamen Heizen lokal miteinander verbunden werden.

6. Verfahren nach einem der Ansprüche 1 bis 5, **dadurch gekennzeichnet, dass** die Metallbänder im Bereich des Bandanfangs eines der Bänder verbunden werden.

7. Anlage zum Herstellen von Verbundbändern oder -blechen, welche aus zumindest einer unteren Deckschicht (1) aus Metall, einer oberen Deckschicht (2) aus Metall und einer zwischen den Deckschichten (1, 2) angeordneten und mit diesen stoffschlüssig verbundenen Kernschicht (3) aus Kunststoff bestehen,
mit einer Zusammenführvorrichtung (12), in der Metallbänder (4, 5) unter Zwischenschaltung einer Kunststoffbahn (6) zusammenführbar sind,
**dadurch gekennzeichnet, dass** in der Zusammenführvorrichtung (11) oder in Bandlaufrichtung hinter dieser eine Bandverbindungsvorrichtung (17) für eine lokale Verbindung der Metallbänder (4, 5) ohne eine dazwischen angeordnete Kunststoffbahn beim Anfahren des Prozesses angeordnet ist.

8. Anlage nach Anspruch 7, **dadurch gekennzeichnet, dass** die Bandverbindungsvorrichtung (17) als Stanzvorrichtung, Nietvorrichtung, Durchsetzfügevorrichtung, Klebevorrichtung und/oder Schweißvorrichtung ausgebildet ist.

9. Anlage nach Anspruch 7 oder 8, **dadurch gekennzeichnet, dass** die Bandverbindungsvorrichtung (17) für die Erzeugung einer Bandverbindung von sich bewegenden Bändern eingerichtet ist, z.B. indem die Bandverbindungsvorrichtung entlang der Transportrichtung beweglich ausgeführt ist.

10. Anlage nach einem der Ansprüche 7 bis 9, **dadurch gekennzeichnet, dass** der Zusammenführvorrichtung (11) eine Heiz- und/oder Pressvorrichtung (18) nachgeordnet ist, wobei die Bandverbindungsvorrichtung (17) vorzugsweise zwischen der Zusammenführvorrichtung (11) und der Heiz- und/oder Pressvorrichtung (18) angeordnet ist.

11. Anlage nach einem der Ansprüche 7 bis 10, **dadurch gekennzeichnet, dass** die Bandverbindungsvorrichtung (17) für eine Bandverbindung in einem in etwa horizontalen Durchlauf ausgebildet ist.

12. Anlage nach einem der Ansprüche 7 bis 10, **dadurch gekennzeichnet, dass** die Bandverbindungsvorrichtung (17) für eine Bandverbindung in einem in etwa vertikalen Durchlauf ausgebildet ist.

## Claims

1. A method for producing composite strips or composite sheets consisting of at least a first cover layer (1) of metal, a second cover layer (2) of metal and at least one core layer (3) of plastic, which is arranged between the cover layers (1, 2) and integrally connected thereto,
wherein a first metal strip (4) for the first cover layer (1), a second metal strip (5) for the second cover layer (2) and a plastic web (6) for the core layer (3) are continuously merged and continuously connected to one another in an integral manner by applying pressure and/or heat,
**characterized in that** the metal strips (4, 5) initially are locally connected to one another without an interposed plastic web by means of a strip connecting device (17) during the start-up of the continuous process.

2. The method according to claim 1, **characterized in that** the metal strips (4, 5) are temporarily stopped and locally connected to one another in the stationary state during the start-up of the process.

3. The method according to claim 1, **characterized in that** the metal strips are locally connected to one another in the course of the strip transport, e.g. in a reduced-speed creep mode.

4. The method according to one of claims 1 to 3, **characterized in that** the metal strips (4, 5) are locally connected to one another by means of stamping, riveting, clinching, bonding and/or welding.

5. The method according to one of claims 1 to 4, **characterized in that** the metal strips (4, 5) are locally connected to one another after they have been merged and prior to being jointly heated.

6. The method according to one of claims 1 to 5, **characterized in that** the metal strips are connected to one another in the region of the strip beginning of one of the strips.

7. A system for producing composite strips or composite sheets consisting of at least a lower cover layer (1) of metal, an upper cover layer (2) of metal and a core layer (3) of plastic, which is arranged between the cover layers (1, 2) and integrally connected thereto,
with a merging device (12), in which the metal strips (4, 5) can be merged with interposition of a plastic web (6),
**characterized in that** a strip connecting device (17) is arranged in the merging device (11) or downstream thereof referred to the strip transport direction in order to locally connect the metal strips (4, 5) without an interposed plastic web during the start-up of the process.

8. The system according to claim 7, **characterized in that** the strip connecting device (17) is realized in the form of a stamping device, a riveting device, a clinching device, a bonding device and/or a welding device.

9. The system according to claim 7 or 8, **characterized in that** the strip connecting device (17) is designed for producing a connection between moving strips, e.g. **in that** the strip connecting device is realized movably along the transport direction.

10. The system according to one of claims 7 to 9, **characterized in that** a heating and/or pressing device (18) is arranged downstream of the merging device (11), wherein the strip connecting device (17) preferably is arranged between the merging device (11) and the heating and/or pressing device (18).

11. The system according to one of claims 7 to 10, **characterized in that** the strip connecting device (17) is designed for producing a strip connection in an approximately horizontal pass.

12. The system according to one of claims 7 to 10, **characterized in that** the strip connecting device (17) is designed for producing a strip connection in an approximately vertical pass.

## Revendications

1. Procédé, destiné à fabriquer des rubans ou tôles composites, constitués d'au moins une première couche de recouvrement (1) en métal, d'une deuxième couche de recouvrement (2) en métal et d'au moins une couche centrale (3) en matière plastique, placée entre les couches de recouvrement (1, 2) et reliée par matière avec celles-ci,
un premier ruban métallique (4) pour la première couche de recouvrement (1), un deuxième ruban métallique (5) pour la deuxième couche de recouvrement (2) et une bande en matière plastique (6) pour la couche centrale (3) étant regroupés en continu et reliés par matière en utilisant de la pression et/ou de la chaleur,
**caractérisé en ce qu'**au démarrage du processus en continu, à l'aide d'un dispositif de liaison des rubans (17), les rubans métalliques (4, 5) sont reliés localement dans un premier temps, sans bande en matière plastique placée entre eux.

2. Procédé selon la revendication 1, **caractérisé en ce qu'**au démarrage du processus, les rubans métalliques (4, 5) sont temporairement arrêtés et sont reliés localement entre eux, alors qu'ils sont à l'arrêt.

3. Procédé selon la revendication 1, **caractérisé en ce qu'**au cours du transport des rubans métalliques, les rubans sont reliés localement entre eux, par ex. dans un mode furtif à vitesse réduite.

4. Procédé selon l'une quelconque des revendications 1 à 3, **caractérisé en ce que** les rubans métalliques (4, 5) sont localement reliés les uns aux autres par estampage, par rivetage, par assemblage par interpénétration, par collage et/ou par soudage.

5. Procédé selon l'une quelconque des revendications 1 à 4, **caractérisé en ce qu'**après leur regroupement et avant une mise en température commune, les rubans métalliques (4, 5) sont reliés entre eux.

6. Procédé selon l'une quelconque des revendications 1 à 5, **caractérisé en ce que** les rubans métalliques sont reliés dans la zone d'un début de ruban de l'un des rubans.

7. Installation, destinée à fabriquer des bandes ou tôles composites, lesquelles sont constituées d'au moins une couche de recouvrement (1) inférieure en métal, d'une couche de recouvrement (2) supérieure en métal et d'une couche centrale (3) en matière plastique, placée entre les couches de recouvrement (1, 2) et reliée par matière avec celles-ci,
pourvue d'un dispositif de regroupement (12), dans lequel des bandes métalliques (4, 5) sont susceptibles d'être regroupées, sous interposition d'une bande en matière plastique (6),
**caractérisée en ce que** dans le dispositif de regroupement (11), ou derrière celui-ci dans la direction de déplacement des rubans, est placé un dispositif de liaison des rubans (17), pour une liaison des rubans métalliques (4, 5), sans bande en matière plastique placée entre eux.

8. Installation selon la revendication 7, **caractérisée en ce que** le dispositif de liaison des rubans (17) est conçu sous la forme d'un dispositif d'estampage, d'un dispositif de rivetage, d'un dispositif de liaison par interpénétration, d'un dispositif de collage et/ou d'un dispositif de soudage.

9. Installation selon la revendication 7 ou 8, **caractérisée en ce que** le dispositif de liaison des rubans (17) est aménagé pour créer un assemblage des rubans de rubans qui se déplacent par ex. **en ce que** le dispositif de liaison des rubans est réalisé en étant mobile le long de la direction de transport.

10. Installation selon l'une quelconque des revendications 7 à 9, **caractérisée en ce qu'**en aval du dispositif de regroupement (11) est monté un dispositif de chauffage et/ou de pressage (18), le dispositif de liaison des rubans (17) étant placé de préférence entre le dispositif de regroupement (11) et le dispositif de chauffage et/ou de pressage (18).

11. Installation selon l'une quelconque des revendications 7 à 10, **caractérisé en ce que** le dispositif de liaison des rubans (17) est conçu pour relier les rubans dans un passage approximativement horizontal.

12. Installation selon l'une quelconque des revendications 7 à 10, **caractérisé en ce que** le dispositif de liaison des rubans (17) est conçu pour relier les rubans dans un passage approximativement vertical.
